# EUROPEAN PATENT APPLICATION

(11) **EP 4 646 909 A1**
(43) Date of publication of application: **12.11.2025**
(21) Application number: 25157080.0
(22) Date of filing: 11.02.2025
(51) Int. Cl.: A01D 34/00

(54) **A ROBOTIC LAWN MOWER WITH AN ENHANCED CAMERA ARRANGEMENT**

(30) Priority: 07.05.2024 SE 2450486
(71) Applicant: Husqvarna AB, 561 82 Huskvarna (SE)
(72) Inventor: Björling, Elsa, Huskvarna (SE); Hecktor, Ulrik, Huskvarna (SE); Wetterbrandt, Gustav, Huskvarna (SE); Öhrlund, Magnus, Huskvarna (SE); Bengtzohn, Johan, Huskvarna (SE); Bergdahl, Saga, Huskvarna (SE); Glimberg, Tommy, Huskvarna (SE)

(57) **Abstract**

The present disclosure relates to a robotic lawn mower (100) comprising an environmental detection system (200) that in turn comprises at least one camera arrangement (210) adapted to capture environmental images and a control unit (110) adapted to process the captured images to provide environment data. Each camera arrangement (210) comprises an image sensor (211) and at least two light sources (212a, 212b; 213a, 213b) adapted to emit light (401, 402, 403; 501, 502) towards the environment (503, 504). At least two co-operating light sources (212a, 212b; 213a, 213b) of said light sources have mutually different optical characteristics that confer mutually different light distribution characteristics.

## Description

### TECHNICAL FIELD

The present disclosure relates to a robotic lawn mower environmental detection system comprising at least one camera arrangement adapted to capture environmental images and a control unit adapted to process the captured images to provide environment data.

### BACKGROUND

Robotic lawn mowers are becoming increasingly more popular. A robotic lawn mower is usually battery-powered by means of a rechargeable battery and is adapted to cut grass on a user's lawn automatically. A robotic lawn mower can be charged automatically without intervention of the user, and does normally not need to be manually managed after being set once.

In a typical deployment a work area, such as a garden, park, sports field, golf court and the like, the work area is enclosed by a boundary that can be in the form of a boundary wire with the purpose of keeping the robotic lawn mower inside the work area. An electric control signal may be transmitted through the boundary wire thereby generating an (electro-) magnetic field emanating from the boundary wire. The robotic working tool is typically arranged with one or more sensors adapted to sense the control signal.

Alternatively, or as a supplement, the robotic lawn mower can be equipped with a navigation system that is adapted for satellite navigation by means of GPS (Global Positioning System) or some other Global Navigation Satellite System (GNSS) system, for example using Real Time Kinematic (RTK). A boundary is in this case not defined by a physical wire, but by a virtual boundary.

As more and more autonomous robots of different kinds are appearing on the market, the need for being able to operate around the clock has also grown. In the lawn mowing industry, it is also desired to be able to cut grass 24/7. Some customers might even need to tend to their lawns during the dark hours of the day, since the green areas are being used during all the light hours, such as golf courses and soccer lawns for example.

It is today common to use cameras on a variety of autonomous robots. Images from the cameras are used to navigate and localize in the area of operation. For this to work in darkness, some external light source is required. Using an external light source for night vision in robots is common. It is also not unusual to use light sources outside of the visual spectra: infrared or near-infrared wavelengths.

Depending on the purpose of the vision system, different illumination setups are ideal. For object detection and avoidance, it is most important to evenly illuminate the ground within 1-1.5 m directly in front of the robotic lawn mower, whilst not overexposing any part of the volume. For visual odometry and SLAM, it is vital to see as far and wide as possible, within the field of view of the camera. This will mean that the volume close to the camera will be overexposed, when trying to see as far as possible.

It is desirable to provide an environmental detection system, adapted for a robotic work tool, that comprises a camera arrangement that overcomes the above problems. Mainly, it is desirable that the camera arrangement can handle sufficient detection of objects at different distances in dark/low-light surroundings.

### SUMMARY

The object of the present disclosure is to provide an environmental detection system, adapted for a robotic work tool, that comprises a camera arrangement that can handle sufficient detection of objects at different distances in dark/low-light surroundings.

This object is achieved by means of a robotic lawn mower comprising an environmental detection system that in turn comprises at least one camera arrangement adapted to capture environmental images and a control unit adapted to process the captured images to provide environment data. Each camera arrangement comprises an image sensor and at least two light sources adapted to emit light towards the environment. At least two co-operating light sources of said light sources have mutually different optical characteristics that confer mutually different light distribution characteristics.

According to some aspects, the optical characteristics comprise at least one of main light beam direction, degree of light beam collimation, and degree of light beam focus or dispersion.

This means that the camera arrangement is enabled to illuminate the environment in different ways, which in turn enables different objects and different types of objects to be captured and detected.

According to some aspects, the co-operating light sources are constituted by light emitting diodes, LEDs, where at least two of said LEDs are adapted to emit light in at least one of the visual spectrum, the infrared, IR, spectrum, and the near IR spectrum. This means that many different types of energy-efficient LEDs can be used as light sources.

According to some aspects, the control unit is adapted to operate one or more light sources, having the same optical characteristics and forming a set of light sources, at a certain time instant, and to switch between at least two co-operating sets of light sources. The sets have mutually different optical characteristics, each set of light sources comprising at least one light source.

This means that several light sources having the same or at least similar optical characteristics can form a clusters or a set, where different sets of light sources may comprise different number of light sources and even different types of light sources.

According to some aspects, the control unit is adapted to apply a first algorithm to captured images when a first set of light sources is operational, and to apply a second algorithm, different from the first algorithm, to captured images when a second set of light sources is operational. According to some further aspects, the first algorithm is a visual odometry algorithm or based on Simultaneous Localization and Mapping (SLAM) and the second algorithm is an object detection and/or segmentation algorithm.

This means that the control unit is adapted to switch between the co-operating sets of light sources, where a matching algorithm is applied to the respective captured images.

In this way, a tailored algorithm can be used for certain light distribution characteristics such as a certain illumination pattern and/or direction.

According to some aspects, the control unit is adapted to select a certain set of light sources to operate at a certain time in dependence of the current detected environment. This is advantageous since the illumination requirements vary with what is seen by the camera arrangement.

According to some aspects, the control unit is adapted to select a certain set of light sources to operate for every picture frame, such that control unit is adapted to change which set of light sources that is operating for each picture frame. This way, the algorithms always get data at half of the camera frequency, and a higher current can be supplied to the light sources, which leads to increased image quality. The current supplied to the light sources is limited by temperature, and using them only half the time gives longer time to cool down after having been operational.

According to some aspects, the control unit is adapted to control the input current of the set of light sources that is operating at the moment in dependence of the current detected environment, such that an emitted light intensity can be controlled in dependence of the current detected environment.

This enables the control unit to adjust the light intensity to be as bright as possible, without overexposing objects, by computing some simple metrics for each camera image.

According to some aspects, the robotic lawn mower comprises a main body part where a first end portion is facing a forward travelling direction and a second end portion is facing a reverse travelling direction, further comprising a plurality of wheels, and a rotatable cutting disc that is driven by a cutter motor, where at least two drive wheels are drivably connected to a corresponding electric drive wheel motor.

According to some aspects, the environmental detection system further comprises at least one of a radar transceiver, an ultrasonic device, a Lidar device, and/or a boundary wire sensor. This means that the environmental detection system can be very versatile, being adapted to handle many types of input and environments.

This object is also achieved by means of methods associated with the above advantages.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated. Further features of, and advantages with, the present disclosure will become apparent when studying the appended claims and the following description. The skilled person realizes that different features of the present disclosure may be combined to create embodiments other than those described in the following, without departing from the scope of the present disclosure.

### BRIEF DESCRIPTION OF THE DRAWINGS

The present disclosure will now be described more in detail with reference to the appended drawings, where:
- Figure 1: shows a perspective side view of a robotic lawnmower;
- Figure 2: shows a schematic overview of the robotic lawnmower;
- Figure 3A: shows a schematic overview of a camera arrangement;
- Figure 3B: shows a schematic view of a light source;
- Figure 4: shows a schematic side view of the front of the robotic lawn mower;
- Figure 5: show a schematic top view of the robotic lawn mower;
- Figure 6: shows a computer program product; and
- Figure 7: shows a flowchart for methods according to the present disclosure.

### DETAILED DESCRIPTION

Aspects of the present disclosure will now be described more fully hereinafter with reference to the accompanying drawings. The different devices, systems, computer programs and methods disclosed herein can, however, be realized in many different forms and should not be construed as being limited to the aspects set forth herein. Like numbers in the drawings refer to like elements throughout.

The terminology used herein is for describing aspects of the disclosure only and is not intended to limit the present disclosure. As used herein, the singular forms "a", "an" and "the" are intended to include the plural forms as well, unless the context clearly indicates otherwise.

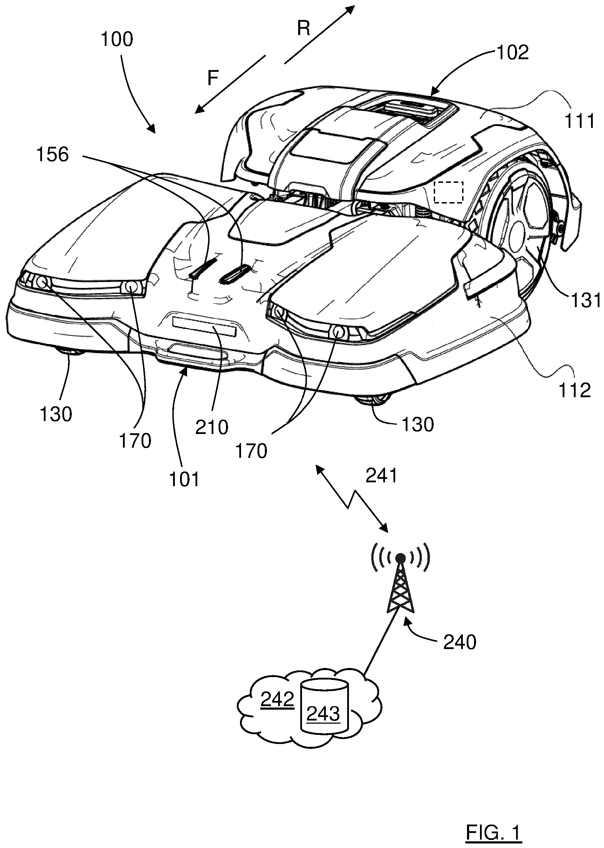

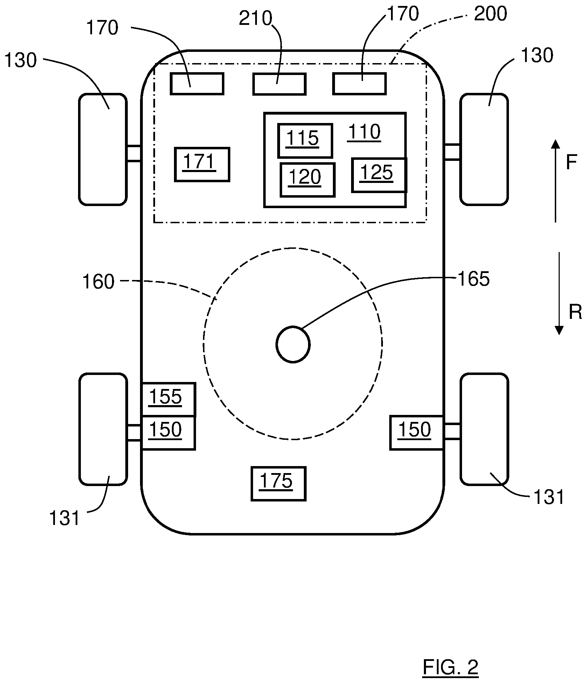

Figure 1 shows a perspective view of a robotic lawnmower 100 and Figure 2 shows a schematic overview of the robotic lawnmower 100. According to some aspects, the robotic lawnmower 100 comprises a main body part 140 where a first end portion 101 is facing a forward travelling direction F and a second end portion 102 is facing a reverse travelling direction R. The man body part may for example comprise two or more sub-parts, for example the sub-parts 111, 112 shown in Figure 1.

According to some further aspects, the robotic lawnmower 100 comprises a rotatable cutting disc 160 that is driven by a cutter motor 165, where at least two drive wheels 131 are drivably connected to an electric drive wheel motor 150. In this example the robotic lawnmower 100 has four wheels, two front wheels 130 and two rear wheels 131. The robotic lawnmower 100 may be a multi-chassis type or a mono-chassis type. A multi-chassis type comprises more than one body parts that are movable with respect to one another. A mono-chassis type comprises only one main body part.

According to some further aspects, the robotic lawnmower 100 further comprises a rechargeable electric power source 155, such as a battery 155, adapted to provide power to the electric motors 150, 165 and a charging reception arrangement 156, for example in the form of charging skids. The charging reception arrangement 156 is adapted to be electrically connected to a charging transmission arrangement at a charging station (not shown).

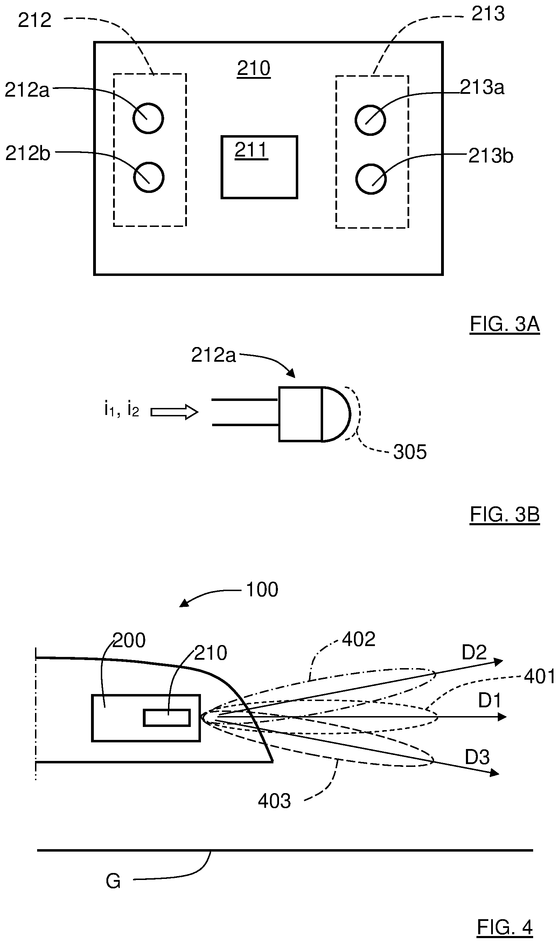

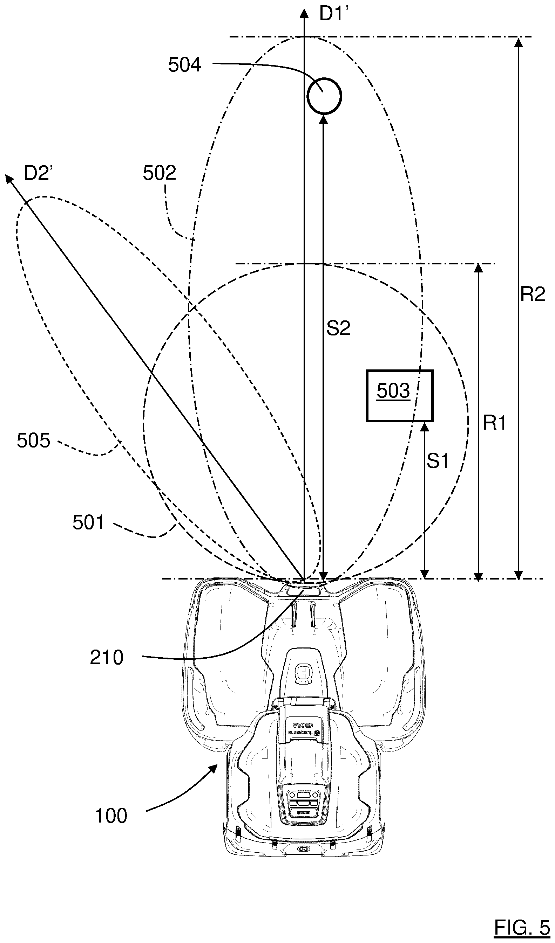

With reference also to Figure 3A, the robotic lawnmower 100 comprises an environmental detection system 200 that in turn comprises at least one camera arrangement 210 adapted to capture environmental images and a control unit 110 adapted to process the captured images to provide environment data. Each camera arrangement 210 comprises an image sensor 211 and at least two light sources 212a, 212b; 213a, 213b adapted to emit light 401, 402, 403; 501, 502 towards the environment 503, 504. In this example, there is one camera arrangement 210 that comprises four light sources 212a, 212b; 213a, 213b, and as shown in Figure 5, the environment is represented by target objects 503, 504 at different distances S1, S2 from the camera arrangement 210.

According to some aspects, the image sensor 211 is adapted to capture images, and to forward the images to the control unit 110, in a previously known manner. The image sensor 211 may be formed by one component or by several components and according to some aspects, the light sources 212a, 212b; 213a, 213b are adapted to emit light 401, 402, 403; 501, 502 towards the environment 503, 504 intended to be captured by the image sensor 211.

According to the present disclosure, with reference also to Figure 4 and Figure 5, at least two co-operating light sources 212a, 212b; 213a, 213b of said light sources have mutually different optical characteristics, that confer mutually different light distribution characteristics.

According to some aspects, the optical characteristics comprise at least one of main light beam direction D1, D2, D3; D1', D2', degree of light beam collimation, and degree of light beam focus or dispersion. According to some further aspects, the optical characteristics comprise at least two of main light beam direction D1, D2, D3; D1', D2', degree of light beam collimation, and degree of light beam focus or dispersion.

In this example, there is a first light source 212a, a second light source 212b, a third light source 213a and a fourth light source 213b. The first light source 212a and the second light source 212b have equal or at least similar first optical characteristics, and the third light source 213a and the fourth light source 213b have equal or at least similar second optical characteristics. The first optical characteristics are mutually different from the second optical characteristics. On one hand the first light source 212a and the second light source 212b, and on the other hand the third light source 213a and the fourth light source 213b form co-operating light sources.

Examples of the optical characteristics follow from Figure 4 and Figure 5, where main light beams correspond to respective sets of light sources, i.e., a certain set of light sources is adapted to generate a certain main light beam.

In Figure 4 there is a first main light beam 401 having a first main light beam direction D1, a second main light beam 402 having a second main light beam direction D2 and a third main light beam 403 having a third main light beam direction D3. The first main light beam direction D1 is directed straight ahead, the second main light beam direction D2 is directed upwards, and the third main light beam direction D3 is directed downwards. The first main light beam 401 can for example be use to illuminate objects in the path of the robotic lawn mower 100, the second main light beam 402 can for example be use to illuminate objects at an elevated positions such as branches from bushes, and the third main light beam 403 can be used to illuminate the ground G ahead of the robotic lawn mower 100.

In Figure 5 there is a first main light beam 501 having a first main light beam range R1, and a second main light beam 502 having a second main light beam range R2 that exceeds the main light beam range R1. The increased length of the second main light beam range R2 compared to the first main light beam range R1 is achieved by the second main light beam 502 being more focused than the first main light beam 501.

There is a first object 503 at a distance S1 that is within the range R1 of the first main light beam 501 as well as within the range R2 of the second main light beam 502. There is a second object 503 at a distance S2 that is within the range R2 of the second main light beam 502, but outside the range R1 of the first main light beam 502.

This means that only the first object 503 appears in images captured of these objects when only the first main light beam 501 is operating. Objects and the lawn itself, far away in the picture is barely visible, meanwhile, objects close to the camera arrangement 210 can be seen clearly, without overexposure. This also means that first object 503 and the second objects both appear in images captured of these objects when only the second main light beam 502 is operating, although the first object 503 probably is over-exposed. In this example, the first main light beam 501 is most suitable when images of the first object 503 are captured, and that the second main light beam 502 is most suitable when images of the second object 504 are captured.

While Figure 4 exemplified different elevation directions, Figure 5 also exemplifies different azimuth directions, where the first main light beam 501 and the second main light beam 502 share a common first main light beam direction D1'. A third main light beam 505 has a differing second main light beam direction D2', having a different azimuthal direction than the first main light beam direction D1'.

By means of the present disclosure, the camera arrangement 210 is enabled to illuminate the environment in different ways, which in turn enables different objects and different types of objects to be captured and detected.

According to some aspects, the co-operating light sources 212a, 212b; 213a, 213b are constituted by light emitting diodes, LEDs, where at least two of said LEDs 212a, 212b; 213a, 213b are adapted to emit light in at least one of the visual spectrum, the infrared (IR) spectrum, and the near IR spectrum. This means that many different types of energy-efficient LEDs can be used as light sources.

According to some aspects, with reference also to Figure 3B, each one of the at least two co-operating light sources 212a, 212b; 213a, 213b comprises a corresponding diffuser 305. This is illustrated for the first light source 212a, but is of course applicable for all light sources in question.

According to some aspects, the control unit 110 is adapted to operate one or more light sources 212a, 212b; 213a, 213b, having the same optical characteristics and forming a set 212, 213 of light sources, at a certain time instant, and to switch between at least two co-operating sets 212, 213 of light sources, the sets 212, 213 having mutually different optical characteristics, each set 212, 213 of light sources comprising at least one light source 212a, 212b; 213a, 213b.

This is in particular illustrated in the example according to Figure 3A, where the first light source 212a and the second light source 212b form a first set 212 of light sources, and where the third light source 213a and the fourth light source 213b form a second set 213 of light sources.

The first set 212 of light sources has the first optical characteristics, and the second set 212 of light sources has the second optical characteristics as mentioned above. This means that several light sources having the same or at least similar optical characteristics can form a clusters or a set, where different sets of light sources may comprise different number of light sources and even different types of light sources. A set of light sources can of course also comprise only one light source.

According to some aspects, at least one set of light sources comprises two or more light sources having the same optical characteristics.

According to some aspects, two or more light sources having the same optical characteristics includes that these light sources have the same light distribution characteristics.

It is to be understood that there are at least two co-operating sets 212, 213 of light sources, where the control unit 110 is adapted to switch between the co-operating sets 212, 213 of light sources.

According to some aspects, the control unit 110 is adapted to apply a first algorithm to captured images when a first set 212 of light sources is operational, and to apply a second algorithm, different from the first algorithm, to captured images when a second set 213 of light sources is operational. According to some further aspects, the first algorithm is a visual odometry algorithm for example based on feature-tracking or based on Simultaneous Localization and Mapping (SLAM), and the second algorithm is an object detection and/or segmentation algorithm.

This means that the control unit 110 is adapted to switch between the co-operating sets 212, 213 of light sources, where a matching algorithm is applied to the respective captured images. In this way, a tailored algorithm can be used for certain light distribution characteristics such as a certain illumination pattern and/or direction.

According to some aspects, the control unit 110 is adapted to select a certain set 212, 213 of light sources to operate at a certain time in dependence of the current detected environment 503, 504. This is advantageous since the illumination requirements vary with what is seen by the camera arrangement. If the second object 503 in Figure 5 is spotted during operation of the second main light beam 502 is operating and is approached by the robotic lawnmower, the second object 503 will at some point become overexposed.

The object detection algorithm used will reveal that the second object 503 is there though, and that information could then be used to adapt the lighting to the scene. When the second object 503 is close, the control unit can switch to operation of the main light beam 502.

According to some aspects, the control unit 110 is adapted to select a certain set 212, 213 of light sources to operate for every picture frame, such that control unit 110 is adapted to change which set 212, 213 of light sources that is operating for each picture frame. This means that in the example of Figure 3A, each set 212, 2133 of light sources is used every other frame. This way, the algorithms always get data at half of the camera frequency, and a higher current can be supplied to the light sources, which leads to increased image quality. The current supplied to the light sources is limited by temperature, and using them only half the time gives longer time to cool down after having been operational. Furthermore, if deemed advantageous, this can be changed in dependence of the current detected environment 503, 504 as discussed above, such that only one set 212, 213 of light sources is controlled to operate at a certain time.

In this context and according to some aspects, the camera arrangement 210 is adapted to capture images at a certain frame rate or frequency, for example 10 images/second or 20 images/second. The light sources are adapted to operate in synch with the image sensor 211, such that a set of light sources are activated when an image is captured. In this example, where there are two sets 212, 213 of light sources, one set of light sources 212, 213 is operated alternatingly with the other set of light sources at half the frame rate or frequency such that only one set 212, 213 of light sources is operated at a time and when a certain image is captured. The control unit 110 may be adapted to determine which algorithm to use for processing for each captured image, or for a set or series of captured images, for example by extracting some measures form the images in question.

According to some aspects, as in particular illustrated in Figure 3B, the control unit 110 is adapted to control the input current i₁, i₂ of the set 212, 213 of light sources that is operating at the moment in dependence of the current detected environment 503, 504, such that an emitted light intensity can be controlled in dependence of the current detected environment 503, 504. By computing some simple metrics for each camera image, the control unit 110 can adjust the light intensity to be as bright as possible, without overexposing objects.

According to some aspects, the environmental detection system 200 further comprises at least one of a radar transceiver 170, an ultrasonic device, a Lidar device, and/or a boundary wire sensor 171. This means that the environmental detection system 200 can be very versatile, being adapted to handle many types of input and environments. According to some further aspects, the control unit 110 is adapted to position the robotic lawn mower 100 by means of input derived from a navigation sensor arrangement 175 and the environmental detection system 200.

According to some aspects, the robotic lawnmower 100 comprises at least one of a navigation sensor arrangement 175 where the navigation sensor arrangement 175 for example may be adapted for satellite navigation by means of GPS (Global Positioning System) or some other Global Navigation Satellite System (GNSS) system, for example using Real Time Kinematic (RTK). In addition to this, the navigation system can be adapted for navigation by means of a local base station that can be housed in the charging station and provide a navigation signal that further increases the navigation accuracy.

With reference to Figure 1, according to some aspects, the control unit 110 may be adapted to be in contact, suitably by means of wireless communication 241, with external units, for example a communication system 240. This may, e.g., be a third generation partnership program (3GPP) defined access network like the fourth generation (4G) or the fifth generation (5G) access networks or a satellite system such as GPS. The access network may provide access to remote networks and other resources such as, e.g., the Internet.

It is also appreciated that some processing functions of the control unit 110 may be performed by resources in a remote network 242, such as a remote server 243.

The control unit 110 may be constituted by a control unit arrangement that comprises one or more control unit parts that can be separate from each other, and may also be arranged to control the operation and propulsion of the robotic lawn mower 100. Some or all control unit parts may be comprised in a control unit arrangement 110 and/or a remote server 243.

With reference also to Figure 2, it is schematically illustrated, in terms of a number of functional units, the components of the control unit 110 according to embodiments of the discussions herein. Processing circuitry 115 is provided using any combination of one or more of a suitable central processing unit CPU, multiprocessor, microcontroller, digital signal processor DSP, etc., capable of executing software instructions stored in a computer program product, e.g. in the form of a storage medium 120. The processing circuitry 115 may further be provided as at least one application specific integrated circuit ASIC, or field programmable gate array FPGA. The processing circuitry thus comprises a plurality of digital logic components.

Particularly, the processing circuitry 115 is configured to cause the control unit 110 to perform a set of operations, or steps to control the operation of the robotic lawn mower 100 including, but not being limited to, controlling the camera arrangement 210, processing measurements results received via the camera arrangement 210, and according to some aspects also controlling operation and propulsion of the robotic lawn mower 100. For example, the storage medium 120 may store the set of operations, and the processing circuitry 115 may be configured to retrieve the set of operations from the storage medium 120 to cause the control unit 110 to perform the set of operations. The set of operations may be provided as a set of executable instructions. Thus, the processing circuitry 115 is thereby arranged to execute at least parts of the methods as herein disclosed.

The storage medium 120 may also comprise persistent storage, which, for example, can be any single one or combination of magnetic memory, optical memory, solid state memory or even remotely mounted memory.

According to some aspects, the control unit 110 further comprises an interface 125 for communications with at least one external device such as a user terminal, the remote server 243 and/or a charging station. As such the interface 125 may comprise one or more transmitters and receivers, comprising analogue and digital components and a suitable number of ports for wireline communication. The interface 125 can be adapted for communication with other devices, such as the remote server 243, a charging station, and/or other robotic working tools. Examples of such wireless communication devices are Bluetooth^{®}, WiFi^{®} (IEEE802.11b), Global System Mobile (GSM) and LTE (Long Term Evolution), to name a few. This means that, according to some aspects, other units such as the remote server 243 are adapted to partly execute the methods as herein disclosed.

Generally, the present disclosure relates to a control unit arrangement 110 is adapted to execute any of the methods disclosed herein.

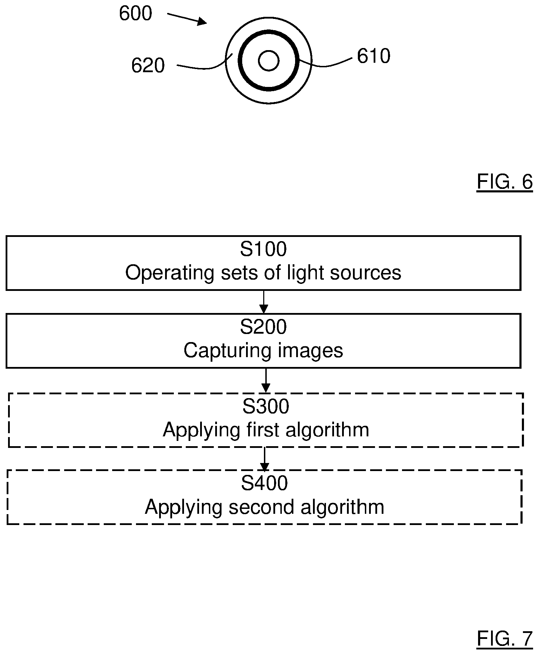

Figure 6 shows a computer program product 600 comprising computer executable instructions 610 stored on media 620 to execute any of the methods disclosed herein.

With reference to Figure 7, the present disclosure also relates to a method for controlling a camera arrangement 210 used in a robotic work tool environmental detection system 200 for capturing environmental images. The method comprises operating S100 at least two co-operating sets 212, 213 of light sources one at a time, and capturing S200 environmental images. Each co-operating set 212, 213 of light sources comprises at least one light source 212a, 212b; 213a, 213b used for emitting light 401, 402, 403; 501, 502 towards an environment 503, 504, and the corresponding light sources 212a, 212b; 213a, 213b comprised in at least two different co-operating sets 212, 213 of light sources have mutually different optical characteristics that confer mutually different light distribution characteristics.

According to some aspects, the optical characteristics comprise at least one of main light beam direction D1, D2, D3, degree of light beam collimation, and degree of light beam focus or dispersion.

According to some aspects, the method further comprises applying S300 a first algorithm to captured images when a first set 212 of light sources is operating, and applying S400 a second algorithm, different from the first algorithm, to captured images when a second set 213 of light sources is operating.

According to some aspects, the first algorithm is a visual odometry algorithm or based on Simultaneous Localization and Mapping, SLAM, and the second algorithm is an object detection and/or segmentation algorithm.

According to some aspects, the method further comprises selecting a certain set 212, 213 of light sources to operate at a certain time in dependence of the current detected environment 503, 504.

According to some aspects, the method further comprises selecting a certain set 212, 213 of light sources to operate for every picture frame, such which set 212, 213 of light sources that is operating is changed for each picture frame.

According to some aspects, the method further comprises controlling the input current i₁, i₂ of the set 212, 213 of light sources that is operating at the moment in dependence of the current detected environment 503, 504, such that an emitted light intensity can be controlled in dependence of the current detected environment 503, 504.

The present disclosure is not limited to the examples above, but may vary within the scope of the appended claims. For example, the camera arrangement 210 is illustrated to face the forward travelling direction F, but there can also be other camera arrangements at other positions, for example facing the reverse travelling direction R.

According to some aspects, the term main light beam refers to a light beam that contains the main part of emitted light.

## Claims

1. A robotic lawn mower (100) comprising an environmental detection system (200) that in turn comprises at least one camera arrangement (210) adapted to capture environmental images and a control unit (110) adapted to process the captured images to provide environment data, each camera arrangement (210) comprising an image sensor (211) and at least two light sources (212a, 212b; 213a, 213b) adapted to emit light (401, 402, 403; 501, 502) towards the environment (503, 504), wherein at least two co-operating light sources (212a, 212b; 213a, 213b) of said light sources have mutually different optical characteristics that confer mutually different light distribution characteristics.

2. The robotic lawn mower (100) according to claim 1, wherein the optical characteristics comprise at least one of
- main light beam direction (D1, D2, D3),
- degree of light beam collimation, and
- degree of light beam focus or dispersion.

3. The robotic lawn mower (100) according to any one of the claims 1 or 2, wherein the co-operating light sources (212a, 212b; 213a, 213b) are constituted by light emitting diodes, LEDs, where at least two of said LEDs (212a, 212b; 213a, 213b) are adapted to emit light in at least one of
- the visual spectrum;
- the infrared, IR, spectrum; and
- the near IR spectrum.

4. The robotic lawn mower (100) according to any one of the previous claims, wherein the control unit (110) is adapted to operate one or more light sources (212a, 212b; 213a, 213b), having the same optical characteristics and forming a set (212, 213) of light sources, at a certain time instant, and to switch between at least two co-operating sets (212, 213) of light sources, the sets (212, 213) having mutually different optical characteristics, each set (212, 213) of light sources comprising at least one light source (212a, 212b; 213a, 213b).

5. The robotic lawn mower (100) according to claim 4, wherein the control unit (110) is adapted to apply a first algorithm to captured images when a first set (212) of light sources is operational, and to apply a second algorithm, different from the first algorithm, to captured images when a second set (213) of light sources is operational.

6. The robotic lawn mower (100) according to any one of the claims 4 or 5, wherein the control unit (110) is adapted to select a certain set (212, 213) of light sources to operate at a certain time in dependence of the current detected environment (503, 504).

7. The robotic lawn mower (100) according to any one of the claims 4-6, wherein the control unit (110) is adapted to select a certain set (212, 213) of light sources to operate for every picture frame, such that control unit (110) is adapted to change which set (212, 213) of light sources that is operating for each picture frame.

8. The robotic lawn mower (100) according to any one of the claims 4-7, wherein the control unit (110) is adapted to control the input current (i₁, i₂) of the set (212, 213) of light sources that is operating at the moment in dependence of the current detected environment (503, 504), such that an emitted light intensity can be controlled in dependence of the current detected environment (503, 504).

9. The robotic lawn mower (100) according to any one of the previous claims, comprising a main body part (140) where a first end portion (101) is facing a forward travelling direction (F) and a second end portion (102) is facing a reverse travelling direction (R), the robotic lawn mower (100) further comprising a plurality of wheels (130, 131) and a rotatable cutting disc (160) that is driven by a cutter motor (165), where at least two drive wheels (131) are drivably connected to a corresponding electric drive wheel motor (150).

10. A method for controlling a camera arrangement (210) used in a robotic work tool environmental detection system (200) for capturing environmental images, the method comprising
operating (S100) at least two co-operating sets (212, 213) of light sources one at a time; and
capturing (S200) environmental images;
where each co-operating set (212, 213) of light sources comprises at least one light source (212a, 212b; 213a, 213b) used for emitting light (401, 402, 403; 501, 502) towards an environment (503, 504), and where the corresponding light sources (212a, 212b; 213a, 213b) comprised in at least two different co-operating sets (212, 213) of light sources have mutually different optical characteristics that confer mutually different light distribution characteristics.

11. The method according to claim 10, wherein the optical characteristics comprise at least one of
- main light beam direction (D1, D2, D3),
- degree of light beam collimation, and
- degree of light beam focus or dispersion.

12. The method according to any one of the claims 10 or 11, further comprising
applying (S300) a first algorithm to captured images when a first set (212) of light sources is operating; and
applying (S400) a second algorithm, different from the first algorithm, to captured images when a second set (213) of light sources is operating.

13. The method according to any one of the claims 10-12, further comprising selecting a certain set (212, 213) of light sources to operate at a certain time in dependence of the current detected environment (503, 504).

14. The method according to any one of the claims 10-13, further comprising selecting a certain set (212, 213) of light sources to operate for every picture frame, such which set (212, 213) of light sources that is operating is changed for each picture frame.

15. The method according to any one of the claims 110-14, further comprising controlling the input current (i₁, i₂) of the set (212, 213) of light sources that is operating at the moment in dependence of the current detected environment (503, 504), such that an emitted light intensity can be controlled in dependence of the current detected environment (503, 504).
